# DEMANDE DE BREVET EUROPEEN

(11) **EP 0 721 289 A1**
(43) Date de publication de la demande: **10.07.1996**
(21) Numéro de dépôt: 96400003.8
(22) Date de dépôt: 02.01.1996
(51) Int. Cl.: H04Q 7/30, H04Q 7/32

(54) **Système de répartition temporelle dynamique de traitements dans une station fonctionnant selon le mode d'accès multiple à répartition dans le temps**

(30) Priorité: 05.01.1995 FR 9500067
(71) Demandeur: ALCATEL MOBILE PHONES, F-75015 Paris (FR)
(72) Inventeur: Abdesselem, Ouélid, F-75015 Paris (FR); Massy, Christian, F-92310 Sevres (FR); Gerard, François, F-75116 Paris (FR)
(74) Mandataire: Pothet, Jean Rémy Emile Ludovic

(57) **Abrégé**

L'invention fournit un système de répartition temporelle dynamique de traitements au cours d'une durée de trame (T), dans une station fonctionnant selon le mode d'accès multiple à répartition dans le temps.

Le système est caractérisé en ce qu'il comprend:
- un ensemble de N ressources de traitement configurables (R1, R2, R3) indépendantes entr'elles et respectivement associées à N fenêtres temporelles dans la trame, avec N étant un entier prédéterminé supérieur à 1,
- des moyens pour configurer lesdites N ressources de traitement configurables, respectivement en N ressources de traitement configurées chacune susceptible d'être activée pour un traitement particulier respectif en vue duquel elle est configurée, et
- des moyens (1) pour activer chacune desdites N ressources de traitement configurables préalablement configurées, de sorte que lesdits traitements particuliers respectifs sont effectués pendant la durée de trame (T).

## Description

La présente invention concerne de manière générale un système de répartition temporelle dynamique de traitements dans une station fonctionnant selon le mode d'accès multiple à répartition dans le temps. L'invention s'applique notamment à une station mobile, ou radiotéléphone, dans un réseau de radiocommunications avec des mobiles, tel que G.S.M (Global System for Mobile Communication) ou DCS-1800 (Digital communication System at 1800 MHz).

Dans un mode d'accès multiple à répartition dans le temps, les émission et réception de données sont organisées en motifs temporels répétitifs, appelés trames. Une trame est définie par une durée fixe prédéterminée T, typiquement égale à 4,615 ms dans le réseau GSM. Elle est découpée en M intervalles temporels, offrant ainsi la possibilité à une station de base du réseau d'établir, sur une même porteuse, M communications respectivement avec M stations mobiles. Durant la période d'une trame, une station mobile est susceptible d'effectuer des traitements différents, par exemple des émission et réception radioélectriques durant deux fenêtres respectives. Dans le cadre d'un réseau cellulaire de radiocommunications avec des mobiles de type G.S.M., tel que décrit dans l'ouvrage "Systèmes de radiocommunications avec des mobiles" J.G REMY et al. édition EYROLLES, collection CNET-ENST, 1992, pages 598-599, les traitements opérés durant une même période de trame peuvent être au moins de trois sortes : ouverture d'une fenêtre de réception radioélectrique pour recevoir des données, ouverture d'une fenêtre d'émission radioélectrique pour émettre des données, et ouverture d'une fenêtre de réception radioélectrique de surveillance (Monitoring en terminologie anglo-saxonne) de station de base. Les traitements précités, respectivement désignées par ouverture de fenêtre Rx, ouverture de fenêtre Tx et ouverture de fenêtre Mx, résultent en outre de la commande d'une chaîne d'émission/réception radioélectrique.

Typiquement, selon la technique antérieure, dans une station mobile d'un réseau de radiocommunications, le séquencement des traitements d'ouverture de fenêtres est prédéterminé pour chaque phase donnée de fonctionnement de la station mobile. A titre d'exemple, une phase peut consister en une phase élémentaire d'appel par la station mobile (phase RACH), une phase élémentaire de mesure de niveau de rattachement à un réseau d'abonnement (phase PLMN), une phase élémentaire de surveillance des appels reçus (phase PCH), ou encore en une phase complexe résultant de la combinaison, ou superposition, de plusieurs phases élémentaires, telles que phase de réception de données, phase d'émission de données et phase de surveillance de station de base, lorsqu'une communication est établie. Il est envisagé selon la technique antérieure de prévoir, lors de la conception de la station mobile, toutes les phases possibles, élémentaires et complexes, caractérisant les états de fonctionnement de celle-ci, et d'associer à chacune de ces phases la combinaison particulière prédéterminée de traitements qui est appropriée. A chaque phase donnée, élémentaire ou complexe, est ainsi associée une combinaison particulière de traitements d'ouverture de fenêtre. Pour une phase complexe donnée, la combinaison particulière prédéterminée des ouvertures de fenêtres qui est appropriée est déterminée, et ces ouvertures de fenêtre de la combinaison sont tour à tour activées tout au long de la phase. Ainsi donc, n'est retenu que l'aspect fonctionnel de la station mobile défini par ses phases de fonctionnement, indépendamment du caractère intrinsèque d'indépendance des ressources temporelles, ou fenêtres, entr'elles. Pour chaque nouvelle phase de fonctionnement de la station, il résulte un développement logiciel additionnel qui augmente la complexité de la station mobile. En pratique, le nombre de phases possibles est limité en dépendance des différents états possibles de fonctionnement de la station.

Une telle réalisation selon la technique antérieure n'apparaît pas optimale dès lors qu'apparaissent de nouvelles contraintes particulières de fonctionnement de la station mobile qui s'opposent au caractère figé des seules phases de fonctionnement envisagées pour cette station. A titre d'exemple, l'évolution du réseau GSM, défini par un spectre de 174 fréquences, vers un réseau DCS-1800, défini par un spectre de 374 fréquences, a révélé les limites des réalisations selon la technique antérieure, par exemple pour un mode de fonctionnement de "rattachement" d'une station mobile à un réseau cellulaire de radiocommunications, en résultat par exemple d'une mise sous tension de la station mobile, ou d'une recherche d'un réseau d'opérateur particulier, ou réseau PLMN, par l'usager. Une telle procédure débute par une recherche des fréquences balises émises par des stations de base les plus proches de la station mobile, en fonction des niveaux de réception de chaque fréquence du spectre mesurés par la station mobile. Pour chaque mesure, un synthétiseur appartenant à la chaîne d'émission/réception radioélectrique est positionné sur une fréquence respective du spectre, et une fenêtre Mx est ouverte pour l'acquisition des échantillons. Pour chaque fréquence du spectre, les échantillons acquis subissent un traitement de mesure, éventuellement précédé par un traitement de moyennage sur plusieurs fenêtres successivement ouvertes pour la même fréquence. En raison du nombre élevé de fenêtres Mx à ouvrir dans le cas du DCS-1800, compte tenu des 374 fréquences du spectre, cette recherche des fréquences balises qui sont émises par des stations de base les plus proches de la station mobile peut avoir une durée relativement longue. Les Recommandations DCS-1800 spécifient que la durée de la procédure de recherche d'un réseau d'opérateur particulier ne doit pas être supérieure à 5 secondes. Bien que limitée, cette durée est néanmoins relativement longue et empêche avant son expiration qu'une autre phase élémentaire de fonctionnement de la station mobile, telle que phase d'écoute des appels reçus, ne puisse être activée pour se superposer à la phase de recherche. En se basant sur une approche fonctionnelle de la station mobile, la technique antérieure ne peut remédier au problème de la durée imposée de la procédure de recherche qu'en augmentant la complexité de la station mobile par addition d'une phase dédiée à l'ouverture de plusieurs fenêtres Mx, typiquement 3, au cours d'une même durée de trame T. Pendant la durée de cette phase, un traitement d'écoute des appels reçus n'est pas possible, à moins qu'une phase complexe, résultant de la superposition d'un traitement d'ouverture de 2 fenêtres Mx par trame et d'un traitement d'ouverture d'une fenêtre d'écoute des appels reçus ne soit prévue.

Il résulte de l'approche fonctionnelle, qui est utilisée selon la technique antérieure pour la conception de la station mobile, la nécessité de définir préalablement des phases complexes qui sont chacune associée à une combinaison appropriée et figée d'ouvertures de fenêtres, et qui sont tour à tour activées chacune pour un mode de fonctionnement particulier de la station. Cette approche fonctionnelle n'apparaît pas optimale dès lors que s'avère nécessaire une optimisation ou une évolution de la station mobile.

L'invention vise à remédier à l'inconvénient précité en fournissant un système de répartition temporelle dynamique de traitements qui ne recourt pas à une définition préalable de phases complexes, mais utilise une superposition dynamique de phases élémentaires, telles qu'ouvertures de fenêtre.

A cette fin, un système de répartition temporelle dynamique de traitements au cours d'une durée de trame, dans une station fonctionnant selon le mode d'accès multiple à répartition dans le temps, est caractérisé selon l'invention en ce qu'il comprend:
- un ensemble de N ressources de traitement configurables indépendantes entr'elles et respectivement associées à N fenêtres temporelles dans la trame, avec N étant un entier prédéterminé supérieur à 1,
- des moyens pour configurer lesdites N ressources de traitement configurables, respectivement en N ressources de traitement configurées chacune susceptible d'être activée pour un traitement particulier respectif en vue duquel elle est configurée, et
- des moyens pour activer chacune desdites N ressources de traitement configurables préalablement configurées, de sorte que lesdits traitements particuliers respectifs sont effectués pendant la durée de trame.

La station peut être une station mobile dans un réseau de radiocommunications avec des mobiles comprenant en outre une chaîne d'émission/réception radioélectrique. Elle peut également consister en une station de base.

L'ensemble des ressources comprend, en outre, un sous-ensemble de N organes de séquencement chacun configurable par au moins un message qui est fonction d'une phase élémentaire de fonctionnement de la station mobile, chacun desdits organes étant activé pour séquencer des fonctions applicatives relatives à la phase élémentaire pour lequel ledit organe est configuré. Le système comprend alors un organe applicatif commun comprenant une pluralité de fonctions applicatives susceptibles d'être appelées par chacun desdits organes de séquencement.

Avantageusement, l'ensemble comprend en outre un sous-ensemble de N mémoires-tampons chacune configurable par la mémorisation de mots spécifiques de commande de ladite chaîne d'émission/réception radioélectrique transmis par l'un respectif desdits organes de séquencement, et chacune susceptible d'être activée pour un traitement de programmation de ladite chaîne d'émission/réception.

L'ensemble peut également comprendre en outre un sous-ensemble de N mémoires-tampons chacune configurable par la mémorisation d'échantillons de données reçus en provenance de ladite chaîne d'émission/réception radioélectrique en réponse à une fenêtre temporelle de réception, et chacune susceptible d'être activée pour un traitement de transmission desdits échantillons de données reçus à destination de l'un respectif desdits organes de séquencement.

Egalement, l'ensemble peut comprendre en outre un sous-ensemble de N mémoires-tampons chacune configurable par la mémorisation d'échantillons de données reçus en provenance de l'un respectif desdits organes de séquencement, et chacune susceptible d'être activée pour transmettre lesdits échantillons de données dans une fenêtre temporelle d'émission.

Il est prévu typiquement une unité de gestion pour configurer à nouveau l'un desdits organes de séquencement préalablement à ce qu'une phase courante pour laquelle ledit un organe de séquencement est configurée ne soit terminée, dès lors qu'intervient une phase suivante ayant un niveau de priorité supérieur à un niveau de priorité de ladite phase courante,
Selon une variante de la mise en oeuvre de l'invention, les N ressources d'un même sous-ensemble sont, au cours d'une durée de trame, tous sollicitées pour N traitements respectifs de réception de données dans N fenêtres de surveillance.

D'autres caractéristiques et avantages de la présente invention apparaîtront plus clairement à la lecture de la description suivante, en référence aux deux dessins annexés correspondants, dans lesquels :
- la figure 1 est un bloc diagramme schématique d'un système selon l'invention de répartition temporelle dynamique de traitement dans une station fonctionnant selon le mode d'accès multiple à répartition dans le temps; et
- la figure 2 montre en détail un bloc diagramme détaillé d'une partie du système de la figure 2, pour un mode de réalisation préféré relatif à une station mobile dans un réseau de radiocommunications avec des mobiles.

La description qui suit est relative à une réalisation concernant une station mobile dans un réseau de radiocommunications avec des mobiles.

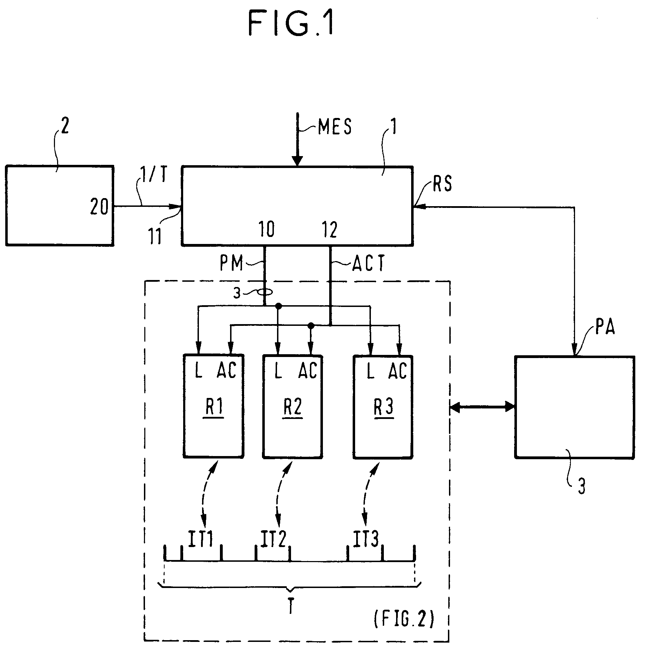

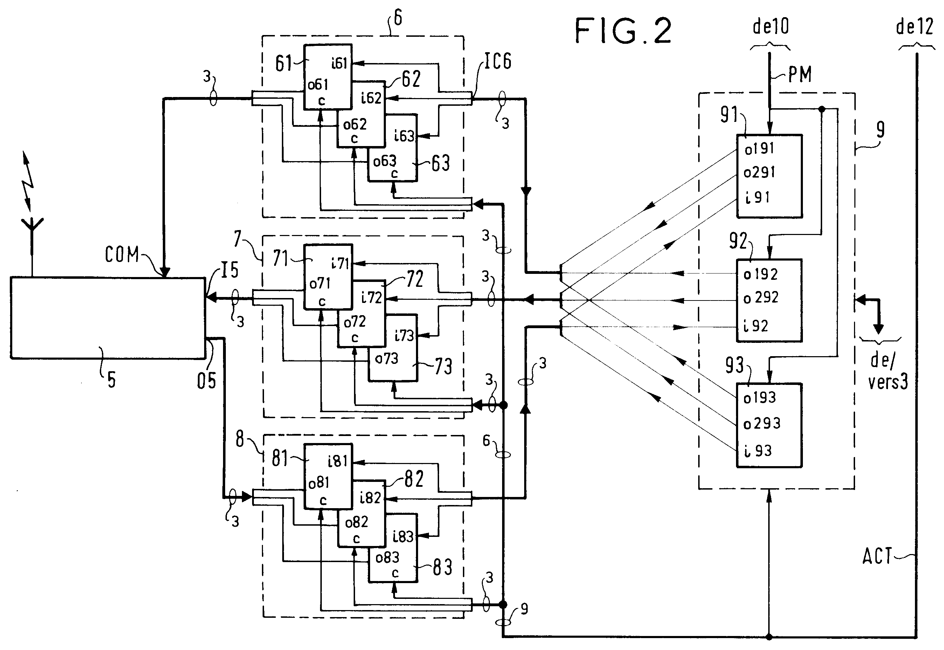

En référence à la figure 1, un bloc diagramme très schématique d'un système de répartition temporelle de traitement selon l'invention comprend une unité de gestion 1, une base de temps 2, un organe applicatif 3 et un ensemble de N=3 ressources de traitement configurables R1, R2 et R3. Bien que représenté sous la forme d'un ensemble unique dans cette figure 1, il existe en pratique plusieurs sous-ensembles de ressources de traitement configurables différents qui seront introduits en référence à la figure 2. N=3 sorties de configuration 10 de l'unité de gestion 1 sont appliquées à N=3 entrées de chargement respectives L des ressources de traitement configurables R1, R2 et R3. N=3 sorties d'activation 12 de l'unité de gestion 1 sont appliquées à N=3 entrées d'activation AC respectives des ressources de traitement R1, R2 et R3. Une sortie 20 de la base de temps 2 est appliquée à une entrée 11 de l'unité de gestion 1. L'unité de gestion 1 est connectée à l'organe applicatif 3. Chacune des trois ressources R1, R2 et R3 fait appel à des fonctions applicatives communes, sous la forme d'entités matérielles et logicielles, incluses dans l'organe 3. Le fonctionnement du système présenté est le suivant. En cours de fonctionnement normal, l'unité de gestion 1 reçoit des messages MES identifiant de nouvelles phases élémentaire de fonctionnement de la station mobile, telle que phase de rattachement de la station mobile à un réseau donné, ou encore phase de demande d'établissement d'un appel par la station mobile, etc....En réponse à la réception d'un tel message MES, l'unité de gestion 1 décide de l'utilisation des ressources R1, R2 et R3, qui sont indépendantes entr'elles, pour des traitements respectifs donnés, associés à des phases élémentaires, pouvant être identiques entr'elles, en vue de mettre en oeuvre de manière optimale l'ensemble des phases de fonctionnement dans la station mobile. Pour cela, l'unité de gestion 1 transmet aux ressources R1, R2 et R3 via la sortie 10 des messages de configuration respectifs PM. En début de trame, sur réception d'une interruption matérielle de début de trame, l'unité de gestion 1 a pour fonction de configurer de manière définitive pour la durée de la trame, en fonction des messages MES qu'elle reçoit, les N ressources de traitement configurables, respectivement en N ressources de traitement configurées chacune susceptible d'être activée pour mettre en oeuvre un traitement particulier pour lequel elle est configurée. Une telle configuration résulte de la transmission, par l'unité 1 à destination de chaque ressource R1, R2 et R3, d'un message de configuration respectif PM identifiant une phase particulière de fonctionnement. Par ailleurs, l'unité de gestion est susceptible de transmettre à l'organe applicatif 3 des messages d'initialisation de l'organe applicatif PA. A titre d'exemple, dans la réalisation décrite, un tel message d'initialisation peut consister en un mot d'identification du réseau de radiocommunications considéré, G.S.M ou DCS 1800, qui a pour effet d'initialiser de manière appropriée les fonctions applicatives dans l'organe 3 qui sont appelées par les ressources R1, R2 et R3. Selon l'invention, une ressource est dite configurable lorsqu'elle n'est pas associée de manière figée à un traitement particulier et, en conséquence, nécessite d'être configurée. Une telle ressource configurable est activée postérieurement à sa configuration pour mettre en oeuvre le traitement particulier pour lequel elle est configurée. L'unité 1 cadencée en fonction notamment du rythme trame 1/T fourni par la base de temps 2, produit les signaux d'activation ACT respectifs appliqués aux entrées d'activation AC des ressources R1, R2 et R3, pour activer chacune de ces N=3 ressources de traitement configurables préalablement configurées, de sorte que les traitements particuliers sont effectués pendant des fenêtres temporelles respectives distinctes entr'elles au cours de la durée de trame. En résultat des traitements opérés par ces fonctions applicatives appellées par les ressources R1, R2 et R3, des résultats de traitement RS, par exemple de réception, sont transmis de l'organe 3 vers l'unité de gestion 1. En raison du caractère indépendant de chaque ressource R1, R2 et R3, et en cas de disponibilité de chacune d'elles, celles-ci peuvent être toutes utilisées à des fins d'ouverture de fenêtres de surveillance Mx en vue de réduire le délai de la procédure de rattachement à un réseau. La mise en oeuvre de ces N=3 traitements particuliers, pouvant être identiques entre eux, respectivement par les N=3 ressources de traitement configurables R1, R2 et R3 pendant des fenêtres temporelles respectives IT1, IT2 et IT3 distinctes entr'elles au cours de la durée de trame T, est schématisée par les flèches en trait discontinu dans la figure 1. L'unité 1 est susceptible de recevoir un message MES alors même que la phase en cours n'est pas terminée. Afin de parfaire l'approche par phase élémentaire de fonctionnement de la station selon l'invention, et non fonctionnelle telle qu'envisagée selon la technique antérieure, il est alors prévu d'associer à chaque phase élémentaire un niveau de priorité. En résultat de cela, et à titre d'exemple, considérons le cas d'une phase élémentaire de rattachement de la station mobile à un réseau pour laquelle les N=3 ressources de traitement R1, R2 et R3 sont utilisées pour ouvrir N=3 fenêtres de surveillance Mx, et supposons qu'un message MES identifiant une phase d'écoute des appels reçus qui posséde un niveau de priorité supérieur au niveau de priorité de la phase de rattachement soit reçu par l'unité de gestion 1. Dans ce cas, l'une des N=3 ressources de traitement est configurée à nouveau par l'unité de gestion 1, alors même que la phase en cours dans cette ressource de traitement n'est pas terminée dans cette ressource, pour un traitement d'ouverture de fenêtre d'écoute des appels reçus alors que les (N-1) = 2 autres ressources de traitement sont maintenues pour les traitements d'ouverture de fenêtre de surveillance Mx. Il y a donc une indépendance totale des ressources entr'elles qui résulte d'une approche, non pas fonctionnelle de la station mobile, mais basée sur une découpe du fonctionnement de la station en phases élémentaires indépendantes.

La notion de "ressource de traitement configurable" apparaît, telle qu'introduite en référence à cette figure 1, très schématique. Une réalisation concrète relative à une station mobile dans un réseau de radiocommunications avec des mobiles est maintenant donnée en référence à la figure 2 qui détaille l'implémentation d'une pluralité de sous-ensembles de N ressources configurables, au sein de chacun desquels sous-ensembles, chaque ressource préalablement configurée est susceptible d'être activée pour mettre en oeuvre un traitement particulier pour lequel elle est configurée. La réalisation comprend une chaîne d'émission / réception radioélectrique 5, et quatre sous-ensembles de N=3 ressources chacun, qui sont notés 6, 7, 8 et 9. Les ressources des trois sous-ensembles 6, 7 et 8 consistent en des mémoires-tampons, et les ressources du sous-ensemble 9 consistent en des organes de séquencement. Les N=3 ressources (mémoires-tampons) du sous-ensemble 6 sont notées 61, 62 et 63, les N=3 ressources (mémoires-tampons) du sous-ensemble 7 sont notées 71, 72 et 73, les N=3 ressources (mémoires-tampons) du sous-ensemble 8 sont notées 81, 82 et 83, et les N=3 ressources (organes de séquencement) du sous-ensemble 9 sont notées 91, 92 et 93. Les mémoires-tampons 61, 62 et 63 sont destinées à mémoriser des mots de commande de la chaîne d'émission/réception radioélectrique 5, les mémoires-tampons 71, 72 et 73 sont destinées à mémoriser des échantillons de données à transmettre à travers la chaîne d'émission/réception 5 et les mémoires-tampons 81, 82 et 83 sont destinées à mémoriser des échantillons de données reçus à travers la chaîne d'émission/réception 5. Une première sortie o191, o192 et o193 de chacune des N=3 ressources 91, 92 et 93 est appliquée à une entrée i61, i62 et i63 de l'une respective des N=3 ressources 61, 62 et 63. Trois sorties respectives o61, o62 et o63 des trois ressources 61-63 sont appliquées à une entrée de commande COM de la chaîne d'émission/réception radioélectrique 5. Une seconde sortie o291, o292 et o293 de chacune des N=3 ressources 91, 92 et 93 est appliquée à une entrée i71, i72 et i73 de l'une respective des N=3 ressources 71, 72 et 73. Trois sorties respectives o71, o72 et o73 des trois ressources 71, 72 et 73 sont appliquées à une entrée de données I5 de la chaîne d'émission/réception radioélectrique 5. Une sortie de données O5 de la chaîne d'émission/réception radioélectrique 5 est reliée à trois entrées respectives i81, i82 et i83 des ressources 81, 82 et 83. Trois sorties respectives o81, o82 et o83 de ces ressources 81, 82 et 83 sont appliquées à trois entrées i91, i92 et i93 respectives des ressources 91, 92 et 93. Chaque ressource dans les sous-ensembles 61-63, 71-73 et 81-83 possède une entrée d'horloge, notée c, connectée à la sortie d'activation 12 de l'unité de gestion 1, de sorte à être activée sélectivement par un signal ACT produit par l'unité 1. De même, les trois ressources 91, 92 et 93 reçoivent en provenance de l'unité 1 des signaux d'activation ACT respectifs, typiquement d'interruption, pour activer les organes de séquencement que constituent ces ressources 91, 92 et 93.

Le fonctionnement du système va maintenant être décrit en partie en relation avec une phase de recherche d'un réseau d'opérateur particulier (PLMN) demandée par l'usager. Initialement et en fonction des phases élémentaires de fonctionnement à mettre en oeuvre, l'unité de gestion 1 transmet en début de trame T à tous les ou certains des organes de séquencement 91, 92 et 93 des messages de configuration PM respectifs afin que ces organes soient configurés de sorte qu'ils opèrent chacun un traitement donné, typiquement de réception ou d'émission. A partir du signal à la fréquence de trame 1/T reçu par l'unité 1, sont définis des instants d'activation (définis par des signaux d'horloge et d'interruption) respectifs des ressources 61-63, 71-73 81-83 et 91-93. Une fois que les ressources 91-93 sont configurées par l'unité de gestion 1, ces mêmes ressources 91-93, lorsqu'elles sont activées, effectuent des traitements ou bien d'appel des fonctions applicatives mémorisées dans l'organe 3, ou bien de configuration des ressources de mémoire-tampon 61-63 et 71-73. En pratique, si l'une des N=3 ressources de traitement 91-93 est configurée pour une phase élémentaire relative à un traitement d'émission, elle est activée en début de trame pour charger des échantillons de données à transmettre dans la ressource respective correspondante 71-73, et charger des mots de commande de la chaîne d'émission/réception dans la ressource correspondante respective 61-63. Ainsi, si un traitement d'émission concerne l'un des organes 91-93, cet organe 91, respectivement 92, respectivement 93, configure les ressources de mémoire-tampon 61 et 71, respectivement 62 et 72, respectivement 63 et 73. Dans le cas où l'une des ressources 91-93 est configurée pour une phase élémentaire relative à un traitement de réception, ladite ressource est activée aprés réception d'échantillons de données dans la ressource 81-83 correspondante. La configuration de l'une des ressources 61-63 réside dans la mémorisation, ou écriture, d'un mot de commande dans la mémoire-tampon que cette ressource constitue. La configuration de l'une des ressources 71-73 réside dans l'écriture par l'organe de séquencement correspondant respectif 91-93, d'échantillons de données dans la mémoire-tampon que cette ressource constitue. La configuration de l'une des ressources 81-83 réside dans l'écriture par la chaîne d'émission/réception 5, d'échantillons de données dans la mémoire-tampon que cette ressource constitue. Un mot de commande de la chaîne d'émission réception consiste par exemple en une information sur la fréquence d'émission ou réception sélectionnée, l'heure et la durée d'ouverture de la fenêtre, ou montée en puissance, de la chaîne 5, le niveau d'amplification, l'offset...etc. Les données reçues ou à émettre sont typiquement des données de trafic, des informations générales telles qu'informations PLMN, ou données de signalisation.

Chacun des trois organes de séquencement 91-93, configuré par l'unité de gestion 1 de sorte à opérer un traitement relatif à une phase élémentaire donnée, est apte à configurer lorsqu'il est activé, l'une respective des trois ressources de mémoires-tampons 61-63 en écrivant dans celle-ci un mot de commande adapté à l'ouverture d'une fenêtre de surveillance Mx, de réception Rx ou d'émission Tx. Des valeurs spécifiques de fréquence de réception (égale à une fréquence balise considérée), heure et durée d'ouverture de fenêtre, ou montée en puissance, de la chaîne 5, sont ainsi mémorisées, ou écrites, dans ladite chacune des ressources 61-63. L'unité de gestion active tour à tour chacune des N=3 ressources 61-63 grâce aux signaux d'activation ACT produits aux entrées d'horloge respectives c de ces ressources 61-63, de sorte que les valeurs spécifiques, ou mots de commande, mémorisées dans les mémoires-tampons formant ces ressources sont délivrées successivement à l'entrée de commande COM de la chaîne d'émission/réception 5. Il en résulte pour chaque ressource 61-63 un traitement particulier de programmation d'une ouverture de fenêtre dans la chaîne d'émission/réception 5. Ces ressources 61-63 sont activées tour à tour au cours de la durée de trame T. En réponse aux ouvertures de fenêtres par la chaîne 5 résultant de sa programmation, des échantillons de données sont reçus ou émis dans trois fenêtres successives au cours d'une durée de trame T. Dans le cas phase élémentaire relative à un traitement d'émission, des échantillons de données sont écrits en début de trame, pour la fenêtre considérée, par l'une des ressources 91-93 dans l'une respective des mémoires-tampons 81-83. Dans le cas d'un traitement de réception, des échantillons de données reçus sont écrits, pour la fenêtre considérée, par la chaîne d'émission/réception 5 dans l'une respective des mémoires-tampons 81-83.

Parmi les N=3 mémoires-tampons 71-73, celles qui sont configurées par la mémorisation d'échantillons de données à émettre sont chacune susceptible d'être activée pour un traitement de transmission des échantillons de données vers la chaîne d'émission/réception 5. L'activation d'une ressource résulte d'un signal d'activation ACT produit par l'unité 1, qui coincïde avec une ouverture de fenêtre d'émission. Les échantillons de données transmis par chaque ressource de mémoire-tampon 71-73 sont alors émis par la chaîne d'émission/réception 5 lors de l'ouverture d'une fenêtre d'émission.

Parmi les N=3 mémoires-tampons 81-83, celles qui sont configurées par la mémorisation de données reçues en provenance de la chaîne d'émission/réception radioélectrique 5, sont chacune susceptible d'être activée pour un traitement de transmission des échantillons de données reçus en provenance de la chaîne 5 vers l'organe de séquencement correspondant 91-93. L'activation de l'une de ces ressources résulte d'un signal d'activation ACT produit par l'unité 1. Les échantillons de données reçus par l'une de ces ressources de mémoire-tampon 82-83 sont alors délivrés à l'une respective des entrées o91-o93 des organes de séquencement 91-93 du sous-ensemble 9. Chacun des organes de séquencement 91-93, configuré en début de trame par un message qui est fonction d'une phase élémentaire de fonctionnement de la station mobile, à savoir par exemple rattachement de la station mobile à un réseau PLMN, est susceptible d'être activé pour un traitement des échantillons de données ainsi reçus. L'activation de chacune d'elles est opérée par l'unité de gestion 1 qui produit des signaux d'interruption ACT destinées à activer respectivement chacune de ces ressources 91-93. En pratique les N=3 organes de séquencement 91-93 sont sous la forme de trois programmes logiciels indépendants, qui séquencent des des fonctions applicatives 3 dans l'organe applicatif 3 en fonction de la phase élémentaire mise en oeuvre. Un traitement applicatif des données reçues en provenance de l'une des ressources de mémoire-tampon 81-83 par l'une respective des ressources logicielles 91-93, est initialisé par la ressource concernée 91-93 en appelant un programme de traitement (démodulation, ...) dans l'organe applicatif 3. Dans le cas où plus d'une ressource parmi toutes les ressources 91-93 opèrent des traitements respectifs qui sont liés entre eux, les traitements applicatifs respectifs appelés dans l'organe applicatif 3 par ces ressources, peuvent ne pas être indépendants entre eux.

D'après ce qui précède, une phase élémentaire donnée, telle que phase de rattachement à une cellule, peut être dupliquée si nécessaire en autant de phases élémentaires identiques que possible de sorte à augmenter l'efficacité de la station en utilisant de manière optimale les ressources dans chaque sous-ensemble qui sont indépendantes entr'elles. Ainsi la phase de rattachement à un réseau peut être reproduite en N=3 phases de rattachement à un réseau dépendantes entr'elles. Au niveau applicatif 3, les données reçues à traiter résultant de diverses ouvertures de fenêtres Mx sont dépendantes. Par contre les ressources dans chaque sous-ensemble 6, 7, 8 et 9 de N=3 ressources sont indépendantes entr'elles, et utilisées dans ce sens par l'unité de gestion 1.

Dans la conception de l'invention par phases élémentaires et ressources indépendantes, il apparaît judicieux d'introduire la notion de niveau de priorité d'une phase élémentaire, de sorte qu'une phase élémentaire courante en cours utilisant une ressource dans un sous-ensemble de ressources puisse être interrompue par une phase plus prioritaire, et que la ressource puisse être libérée. A cette fin, dans l'unité de gestion 1 configurant les N organes de séquencement 91-93 en début de trame, sont prévus des moyens pour allouer des niveaux de priorité respectifs aux différentes phases élémentaires particulières devant être mises en oeuvre dans la station. Ainsi un message PM qui est transmis par l'unité 1 à un organe de séquencement 91, 92 ou 93, et qui identifie une phase élémentaire de fonctionnement de la station mobile est celui qui est associé à une phase élémentaire possédant un niveau de priorité le plus élevé. Parmi toutes les phases élémentaires en attente de traitement par un organe de séquencement donné 91-93, l'unité de gestion 1 sélectionne celle de ces phases qui possède le niveau de priorité le plus élevé, et un organe de séquencement est configuré par l'unité de gestion 1 par un message MES qui identifie la phase élémentaire la plus prioritaire. Un organe de séquencement 91-93 séquence les fonctions applicatives, et exécute, chaque fois qu'il est activé, des fonctions applicatives dans l'organe 3. L'unité de gestion 1 comprend des moyens pour configurer à nouveau en début de trame au moins une ressource 91-93 préalablement à ce qu'une phase élémentaire en vue de laquelle ladite une des ressources est configurée, ne soit terminée, dès lors qu'une phase particulière différente, associée à un niveau de priorité plus élevé, doit être activé plus prioritairement. Dans le cas particulier d'une phase d'écoute des appels reçus qui est sollicitée pour une des ressources du sous-ensemble 9 alors que la station met en oeuvre une phase de rattachement à une cellule occupant les N=3 ressources de chaque sous-ensemble 6, 7, 8 et 9, le traitement de rattachement à une cellule est maintenu dans (N-1)=2 des N=3 ressources de chaque ensemble 6, 7, 8 et 9, tandis que la phase d'écoute des appels reçus, plus prioritaire, utilise la ressource restante dans chacun de ces sous-ensembles, en vue de permettre l'ouverture d'une fenêtre de réception. L'unité de gestion 1 est garante de cette attribution des traitements de phase élémentaire à chaque organe de séquencement 91-93.

Bien que la description qui précède se limite à considérer une station mobile d'un réseau de radiocommunications, et principalement des modes de fonctionnement particuliers de celle-ci, l'invention peut être étendue à toute station fonctionnant en mode d'accès multiple à répartition dans le temps, telle que station de base d'un réseau de radiocommunications, pour un mode de fonctionnement quelconque de cette station.

En outre, il conviendra de noter que bien que faisant référence à plusieurs sous-ensembles de ressources 6, 7, 8 et 9, l'invention ne se limite pas à un tel cas de figure, et s'applique à tous système fonctionnant selon le mode d'accès multiple à répartition dans le temps dans lequel il est prévu au moins un ensemble de N ressources, N correspondant très exactement au nombre maximal d'ouvertures de fenêtres durant une trame. Ces ressources sont caractérisées par leur indépendance entr'elles, qui résulte de la définition préalable de phases élémentaires dans le fonctionnement du système. Le système utilise en outre une unité de gestion 1 pour attribuer chaque traitement de phase élémentaire à un organe de séquencement donné.

## Revendications

1. Système de répartition temporelle dynamique de traitements au cours d'une durée de trame (T), dans une station fonctionnant selon le mode d'accès multiple à répartition dans le temps,
caractérisé en ce qu'il comprend:
- un ensemble de N ressources de traitement configurables (R1, R2, R3) indépendantes entr'elles et respectivement associées à N fenêtres temporelles dans la trame, avec N étant un entier prédéterminé supérieur à 1,
- des moyens pour configurer lesdites N ressources de traitement configurables, respectivement en N ressources de traitement configurées chacune susceptible d'être activée pour un traitement particulier respectif en vue duquel elle est configurée, et
- des moyens (1) pour activer chacune desdites N ressources de traitement configurables préalablement configurées, de sorte que lesdits traitements particuliers respectifs sont effectués pendant la durée de trame (T).

2. Système conforme à la revendication 1, caractérisé en ce que ladite station est une station mobile dans un réseau de radiocommunications avec des mobiles comprenant en outre une chaîne d'émission/réception radioélectrique (5).

3. Système conforme à la revendication 2, caractérisé en ce que ledit ensemble comprend, en outre, un sous-ensemble de N organes de séquencement (91, 92, 93) chacun configurable par au moins un message (PM) qui est fonction d'une phase élémentaire de fonctionnement de la station mobile, chacun desdits organes étant activé pour séquencer des fonctions applicatives relatives à la phase élémentaire pour lequel ledit organe est configuré.

4. Système conforme à la revendication 3, caractérisé en ce qu'il comprend en outre un organe applicatif commun (3) comprenant une pluralité de fonctions applicatives susceptibles d'être appelées par chacun desdits organes de séquencement.

5. Système conforme à la revendication 3 ou 4, caractérisé en ce que ledit ensemble comprend en outre un sous-ensemble (6) de N mémoires-tampons (61, 62, 63) chacune configurable par la mémorisation de mots spécifiques de commande de ladite chaîne d'émission/réception radioélectrique (5) transmis par l'un respectif desdits organes de séquencement, et chacune susceptible d'être activée pour un traitement de programmation de ladite chaîne d'émission/réception (5).

6. Système conforme à la revendication 3 ou 4, caractérisé en ce que ledit ensemble (8) comprend en outre un sous-ensemble de N mémoires-tampons (81, 82, 83) chacune configurable par la mémorisation d'échantillons de données reçus en provenance de ladite chaîne d'émission/réception radioélectrique (5) en réponse à une fenêtre temporelle de réception, et chacune susceptible d'être activée pour un traitement de transmission desdits échantillons de données reçus à destination de l'un respectif desdits organes de séquencement.

7. Système conforme à la revendication 3 ou 4, caractérisé en ce que ledit ensemble comprend en outre un sous-ensemble de N mémoires-tampons (71, 72, 73) chacune configurable par la mémorisation d'échantillons de données reçus en provenance de l'un respectif desdits organes de séquencement (91-93), et chacune susceptible d'être activée pour transmettre lesdits échantillons de données dans une fenêtre temporelle d'émission.

8. Système conforme à l'une quelconque des revendication 3 à 8, caractérisé en ce qu'il comprend en outre un moyen de gestion (1) pour configurer à nouveau l'un desdits organes de séquencement préalablement à ce qu'une phase courante pour laquelle ledit un organe de séquencement est configurée ne soit terminée, dès lors qu'intervient une phase suivante ayant un niveau de priorité supérieur à un niveau de priorité de ladite phase courante,

9. Système conforme à l'une quelconque des revendications 3 à 8, caractérisée en que les N ressources d'un même sous-ensemble sont, au cours d'une durée de trame (T), tous sollicitées pour N traitements respectifs de réception de données dans N fenêtres de surveillance (Mx).

10. Système conforme à la revendication 1, caractérisé en ce que ladite station est une station de base d'un réseau de radiocommunications avec les mobiles.
